# EUROPÄISCHE PATENTANMELDUNG

(11) **EP 2 315 339 A1**
(43) Veröffentlichungstag der Anmeldung: **27.04.2011**
(21) Anmeldenummer: 09173806.2
(22) Anmeldetag: 22.10.2009
(51) Int. Cl.: H02K 1/18, H02K 1/30, H02K 15/02

(54) **Joch und Verfahren zur Herstellung eines Jochs einer elektrischen Maschine**

(71) Anmelder: SIEMENS AKTIENGESELLSCHAFT, 80333 München (DE)
(72) Erfinder: Balzer, Christoph, 10437 Berlin (DE); Meyer, Christian, 13591 Berlin (DE); Schlawitz, Andre, 13189 Berlin (DE); Schmidt, Jochen, 12459 Berlin (DE)

(57) **Zusammenfassung**

Joch und Verfahren zur Herstellung eines Jochs einer elektrischen Maschine

Die Erfindung bezieht sich auf ein Joch einer elektrischen Maschine (1), wobei das Joch mehrere in einer Achsrichtung (Z) hintereinander angeordnete Bleche (5) aufweist, wobei das Joch in Achsrichtung (Z) durch die Bleche (5) hindurchgehende trapezförmige Ausnehmungen (19) aufweist, wobei die Ausnehmungen (19) jeweilig schräge Kanten (9a,9b) aufweisen, wobei in den Ausnehmungen (19) jeweilig ein trapezförmiger Keil (12) angeordnet ist, wobei der Keil (12) schräge Kanten (10a,10b) aufweist, deren Form an die Form der schrägen Kanten (9a,9b) der jeweiligen Ausnehmung (19) formschlüssig angepasst ist, wobei die Oberseite (14) des Keils (12) von der der Oberseite (14) des Keils (12) zugewandten Seite (8) der jeweiligen Ausnehmung (19) beabstandet angeordnet ist. Weiterhin bezieht sich die Erfindung auf ein Verfahren zur Herstellung des Jochs. Die Erfindung schafft ein Joch einer elektrischen Maschine (1), wobei zur Herstellung des Jochs keine Schweißarbeiten an den Blechen (5) des Jochs notwendig sind.

## Beschreibung

Joch und Verfahren zur Herstellung eines Jochs einer elektrischen Maschine

Die Erfindung betrifft ein Verfahren zur Herstellung eines Jochs einer elektrischen Maschine. Weiterhin betrifft die Erfindung ein diesbezügliches Joch.

Ein Joch einer elektrischen Maschine weist mehrere in Achsrichtung hintereinander angeordnete Bleche auf, die zusammengenommen ein so genanntes Blechpaket bilden. Es ist dabei bekannt, die Bleche des Blechpakets mittels einer so genannten Schwalbenschwanzverkeilung miteinander zu verkeilen. Hierfür ist es beim Stand der Technik erforderlich, die zur Realisierung der Schwalbenschwanzverkeilung notwendigen trapezförmigen Ausnehmungen der Bleche sehr genau zu fertigen und mit Hilfsmitteln zu einem Blechpaket zu packen, da sich die Fertigungstoleranzen der aneinander gereihten Bleche addieren. Zur Herstellung der Schwalbenschwanzverkeilung ist es deshalb oftmals erforderlich, insbesondere wenn die Ausnehmungen zu klein oder zu ungenau gefertigt sind, den Schwalbenschwanzkeil unter Krafteinfluss in die Ausnehmung einzutreiben.

Eine weitere bekannte Methode zur Arretierung der Bleche eines Blechpakets eines Jochs ist die Arretierung der Bleche mittels Rippen, die anstatt der Schwalbenschwanzkeile in das Blechpaket hineinragen und mit diesem direkt verschweißt werden. Das Schweißen an einem Blechpaket ist aber problematisch, da die Bleche mit einer elektrischen Isolierschicht versehen sind, die beim Schweißen durch die hohe Wärmeeinwirkung verbrannt werden kann, wobei die dabei entstehenden Gase zu einer Verunreinigung der Schweißnaht führen. Dies führt wiederum zu einer erhöhten Porösität und geringeren Tragfähigkeit der Schweißnaht. Dies ist insbesondere für die mechanische Stabilität des Joch eines Rotors relevant, da das Joch bei der Rotation des Rotors, aufgrund der dabei auftretenden Fliehkräfte, im Betrieb der elektrischen Maschine einer hohen Belastung ausgesetzt ist.

Es ist Aufgabe der Erfindung ein Joch einer elektrischen Maschine zu schaffen, wobei zur Herstellung des Jochs keine Schweißarbeiten an den Blechen des Jochs notwendig sind.

Diese Aufgabe wird gelöst durch ein Verfahren zur Herstellung eines Jochs einer elektrische Maschine, wobei das Joch mehrere in einer Achsrichtung hintereinander angeordnete Bleche aufweist, wobei das Joch in Achsrichtung durch die Bleche hindurchgehende trapezförmige Ausnehmungen aufweist, wobei die Ausnehmungen jeweilig schräge Kanten aufweisen, wobei in den Ausnehmungen jeweilig ein trapezförmiger Keil eingeführt wird, wobei der Keil schräge Kanten aufweist, deren Form an die Form der schrägen Kanten der jeweiligen Ausnehmung formschlüssig angepasst ist, wobei die Oberseite des Keils von der der Oberseite des Keils zugewandten Seite der jeweiligen Ausnehmung beabstandet angeordnet, wobei zwischen der Oberseite des Keils und der der Oberseite des Keils zugewandten Seite der jeweiligen Ausnehmung ein Federelement eingeschoben wird, das senkrecht zur Achsrichtung eine Kraft auf den Keil ausübt und die schrägen Kanten des Keils gegen die schrägen Kanten der jeweiligen Ausnehmung presst.

Weiterhin wird diese Aufgabe gelöst durch ein Joch einer elektrischen Maschine, wobei das Joch mehrere in einer Achsrichtung hintereinander angeordnete Bleche aufweist, wobei das Joch in Achsrichtung durch die Bleche hindurchgehende trapezförmige Ausnehmungen aufweist, wobei die Ausnehmungen jeweilig schräge Kanten aufweisen, wobei in den Ausnehmungen jeweilig ein trapezförmiger Keil angeordnet ist, wobei der Keil schräge Kanten aufweist, deren Form an die Form der schrägen Kanten der jeweiligen Ausnehmung formschlüssig angepasst ist, wobei die Oberseite des Keils von der der Oberseite des Keils zugewandten Seite der jeweiligen Ausnehmung beabstandet angeordnet ist.

Vorteilhafte Ausbildungen der Erfindung ergeben sich aus den abhängigen Ansprüchen. Vorteilhafte Ausbildungen des Verfahrens ergeben sich analog zu vorteilhaften Ausbildungen des Jochs und umgekehrt.

Es erweist sich als vorteilhaft, wenn der Keil mit einer Rippe verschweißt wird. Hierdurch wird eine besonders stabile Arretierung der Bleche des Blechpakets des Jochs ermöglicht.

Ferner erweist es sich als vorteilhaft, wenn nach dem Verschweißen des Keils mit der Rippe, das Federelement entfernt wird. Die Federelemente können dann bei der Montage des Jochs mehrfach zur Herstellung mehrerer Joche verwendet werden.

Ferner erweist es sich als vorteilhaft, wenn zwischen der Oberseite des Keils und der der Oberseite des Keils zugewandten Seite der jeweiligen Ausnehmung ein Federelement angeordnet ist, das senkrecht zur Achsrichtung eine Kraft auf den Keil ausübt und die schrägen Kanten des Keils gegen die schrägen Kanten der jeweiligen Ausnehmung presst. Hierdurch wird eine zuverlässige Arretierung der Bleche des Blechpakets ermöglicht.

Ferner erweist es sich als vorteilhaft, wenn das Federelement als Wellenfeder ausgebildet ist, da eine Wellenfeder über die gesamte Länge des Blechpakets in Achsrichtung eine Kraft auf den Keil ausübt.

Ferner erweist es sich als vorteilhaft, wenn die Wellenfeder an einem der beiden Enden der Wellenfeder mit dem Keil verbunden ist, da sich dann die Wellenfeder im Falle einer Stauchung entlang dem Keil ausdehnen kann.

Ferner erweist es sich als vorteilhaft, wenn der Keil eine in Achsrichtung verlaufende Nut aufweist in die das Federelement eingelegt ist, da hierdurch das Federelement sich nicht in Y ― Richtung innerhalb der Ausnehmung verschieben kann.

Ferner erweist es sich als vorteilhaft, wenn der Keil mit einer Rippe verschweißt ist, da hierdurch eine besonders belastbare Arretierung der Bleche des Blechpakets des Jochs erzielt wird.

Ferner erweist sich eine elektrische Maschine, wie z.B. ein Generator oder ein Elektromotor, der das erfindungsgemäße Joch aufweist, als vorteilhaft. Der Generator kann dabei z.B. als Windkraftgenerator ausgebildet sein.

Ein Ausführungsbeispiel der Erfindung ist in der Zeichnung dargestellt und wird im Folgenden näher erläutert. Dabei zeigen:
FIG 1 eine elektrische Maschine, die das erfindungsgemäße
   Joch aufweist in Form einer schematisierten Ansicht,
FIG 2 einen Ausschnitt des Jochs in Form einer schematisierten Ansicht und
FIG 3 eine Längsansicht des erfindungsgemäßen Jochs in Form
   einer schematisierten Ansicht.

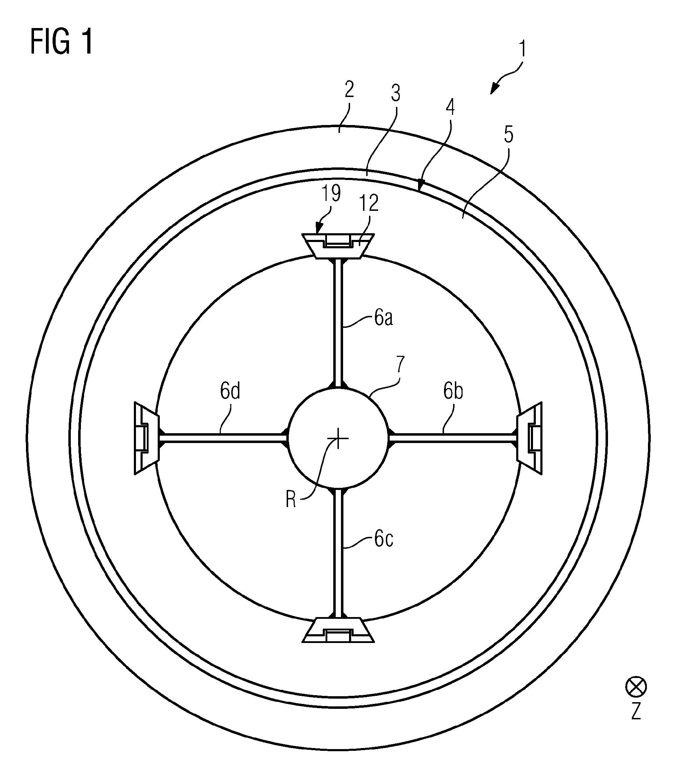

In FIG 1 ist in Form einer schematisierten Darstellung eine elektrische Maschine 1 dargestellt, die das erfindungsgemäße Joch aufweist. Die elektrische Maschine 1 kann dabei z.B. als Elektromotor oder Generator, insbesondere als Windkraftgenerator ausgebildet sein. Die Maschine 1 weist einen gegenüber dem Aufstellungsort der Maschine 1 ruhend angeordneten Stator 2 auf, der in FIG 1 nur schematisiert dargestellt ist und als wesentliche Elemente elektrische Spulen, die ein Magnetfeld erzeugen, aufweist.

Weiterhin weist die Maschine 1 einen um eine Rotationsachse R rotierbar angeordneten Rotor 4 auf, wobei der Rotor 4 die im Betrieb der Maschine 1 um die Rotationsachse R rotierenden Elemente der Maschine 1 umfasst. Der Rotor 4 weist dabei unter anderem als wesentliche Elemente ein Joch und eine Welle 7 auf, die um die Rotationsachse R im Betrieb der Maschine 1 rotieren. Das Joch weist dabei im Rahmen des Ausführungsbeispiels mehrere in Achsrichtung Z hintereinander angeordnete Bleche 5 auf, wobei das Joch in Achsrichtung Z durch die Bleche hindurchgehende trapezförmige Ausnehmungen aufweist, wobei in FIG 1 nur eine Ausnehmung 19 mit einem Bezugszeichen versehen ist.

In der in FIG 1 in Achsrichtung Z dargestellten Ansicht ist dabei nur das vorderste Blech zu sehen. Die Ausnehmungen dienen jeweilig zur Aufnahme eines trapezförmigen Keils 12. Fachspezifisch wird der Keil 12 auch als Schwalbenschwanzkeil bezeichnet. Mit Hilfe des Keils 12 und der trapezförmigen, in Form einer Nut realisierten jeweiligen Ausnehmung ist eine so genannte Schwalbenschwanzverkeilung der Bleche realisiert. Die einzelnen Bleche 5 bilden zusammengenommen ein so genanntes Blechpaket. Im Rahmen des Ausführungsbeispiels sind dabei die Keile über Rippen 6a, 6b, 6c und 6d mit der Welle 7 verbunden, um die Anordnung zu versteifen. Es sei aber an dieser Stelle ausdrücklich angemerkt, dass die Rippen 6a, 6b, 6c und 6d nicht unbedingt vorhanden sein müssen, sondern eine Ausbildung des Jochs auch ohne die Rippen 6a, 6b, 6c und 6d möglich ist.

Es sei weiterhin an dieser Stelle angemerkt, dass in FIG 1 und den folgenden Figuren der Übersichtlichkeit halber nur die zum Verständnis der Erfindung wesentlichen Elemente der Maschine 1 und des erfindungsgemäßen Jochs dargestellt sind. So weisen z.B. die Bleche 5 in der Regel noch weitere Ausnehmungen auf, in die in der Regel Permanentmagnete angeordnet sind.

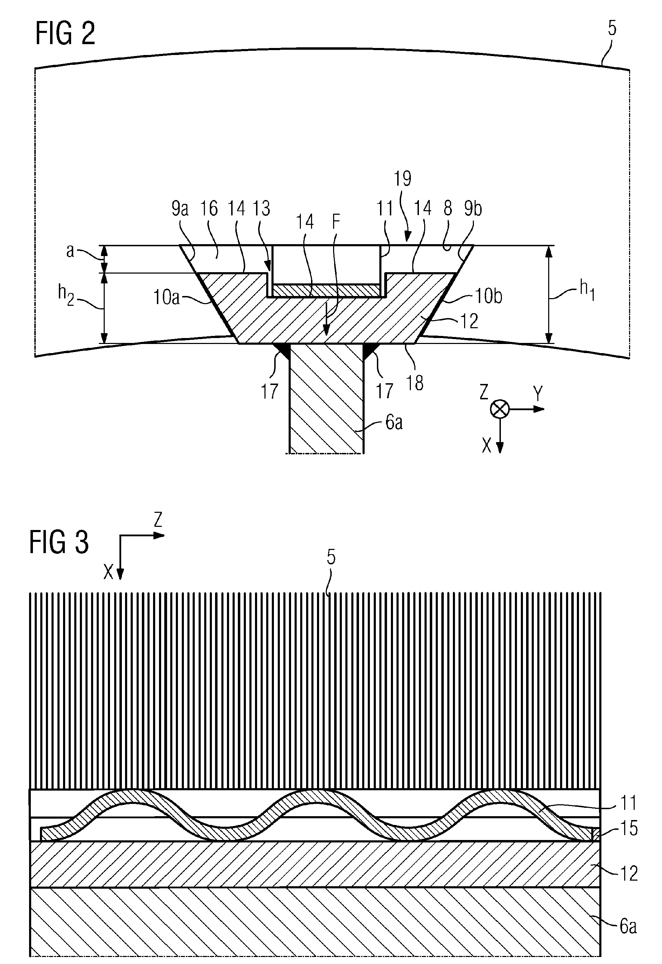

In FIG 2 ist in Form einer schematisierten Darstellung ein Ausschnitt des Jochs vergrößert dargestellt.

In FIG 3 ist hierzu in Form einer schematisierten Ansicht ein durch die Ausnehmung 19 und den Keil 12 hindurchgehender Längsschnitt dargestellt, wobei die einzelnen Bleche 5 des Jochs in Form von senkrecht verlaufenden Strichen angedeutet sind.

Die trapezförmige Ausnehmung 19 verläuft durch das aus den Bleche 5 gebildete Blechpaket in Achsrichtung Z. Die trapezförmige Ausrichtung 19 weist dabei schräge Kanten 9a und 9b auf. Bei der Herstellung des Jochs wird zur Verkeilung der Bleche 5 des Blechpakets ein trapezförmiger Keil 12 in die Ausnehmung 19 eingeführt, wobei der Keil 12 schräge Kanten 10a und 10b aufweist, deren Form an die Form der schrägen Kanten 9a und 9b der Ausnehmung 19 formschlüssig angepasst ist. Der Keil 12 weist dabei eine Oberseite 14 und eine Unterseite 18 auf, wobei im Rahmen des Ausführungsbeispiels die Unterseite 18 des Keils 12 der Welle 7 zugewandt ist. Die Oberseite des Keils 12 weist dabei, gemäß der Ansicht in FIG 2, in Y―Richtung eine größere Seitenlänge auf als die Unterseite 18 des Keils 12. Im Rahmen des Ausführungsbeispiels ist, gemäß der in FIG 1 dargestellten Anordnung, die Oberseite 14 des Keils 12 die dem Stator 2 zugewandte Seite des Keils 12.

Es sei an dieser Stelle darauf hingewiesen, dass bei einer entsprechenden Drehstellung des Rotors 4, die Oberseite 14 des Keils 12 um die Rotationsachse R um 180° gedreht sein kann, also geometrisch gesehen, temporär unterhalb der Unterseite 18 des Keils 12 liegen kann. Der Begriff Oberseite bezieht sich also auf die in FIG 2 dargestellte Anordnung, bei der geometrisch gesehen, in dem in FIG 2 dargestellten Zeitpunkt die Oberseite 14 des Keils 12 gerade oberhalb der Unterseite 18 des Keils 12 angeordnet ist.

Erfindungsgemäß ist die Oberseite 14 des Keils 12 von der der Oberseite des Keils zugewandten Seite 8 der Ausnehmung 19 beabstandet angeordnet. Die Oberseite 14 des Keils 12 weist also zu der der Oberseite 14 des Keils 12 zugewandten Seite 8 der Ausnehmung 19 einen Abstand a auf, wobei im Rahmen des Ausführungsbeispiels der Keil 12 mit einer Nut 13 versehen ist und somit im Bereich der Nut 13, die Oberseite 14 des Keils 12, sogar noch einen etwas größeren Abstand von der der Oberseite 14 des Keils 12 zugewandten Seite 8 der Ausnehmung 19 als der Abstand a aufweist. Somit ist zwischen der Oberseite 14 des Keils und der der Oberseite des Keils zugewandten Seite 8 der Ausnehmung ein Spalt 16 vorhanden. Im Gegensatz zum Stand der Technik ist also bei der Erfindung der Keil 12 nicht komplett formschlüssig an die Ausnehmung 19 angepasst, sondern es ist bewusst die Höhe h₂ des Keils 12 kleiner ausgeführt als die Höhe h₁ der Ausnehmung 19. Der Keil 12 kann somit leicht in die Ausnehmung 19 bei der Herstellung des Jochs in die Ausnehmung eingeführt werden. Es entstehen somit, im Gegensatz zum Stand der Technik, bei Einführen des Keils in die Ausnehmung keine Spannungen im Blechpaket, da der Keil 12 nicht mit Kraftaufwand in die Ausnehmung 19 hineingedrückt werden muss.

Erfindungsgemäß wird nun im Folgenden zwischen der Oberseite 14 des Keils und der der Oberseite des Keils zugewandten Seite 8 der Ausnehmung 19 ein Federelement 11 eingeschoben, das senkrecht zur Achsrichtung Z, d.h. gemäß FIG 2 in X-Richtung, eine Kraft F auf den Keil 12 ausübt und somit die schrägen Kanten 10a und 10b des Keils gegen die schrägen Kanten 9a und 9b der Ausnehmung 19 presst. Das Federelement 11 ist dabei, im Rahmen des Ausführungsbeispiels, in der Nut 13 des Keils 12 angeordnet, so dass sich das Federelement 11 in Y-Richtung (siehe FIG 2) nur geringfügig verschieben kann.

Das Federelement 11 ist dabei vorzugsweise, wie in FIG 3 dargestellt, als Wellenfeder ausgebildet. Gleiche Elemente sind in FIG 3 mit den gleichen Bezugszeichen versehen wie in FIG 2. Vorzugsweise wird die Wellenfeder 11 an einem der beiden Enden der Wellenfeder 11 über eine Verbindung 15 mit dem Keil 12 verbunden. Die Verbindung 15 kann dabei z.B. in Form einer Schraub- oder einer Schweißverbindung vorliegen.

Das Joch ist dann im Rahmen einer ersten Ausführungsform der Erfindung schon fertig gestellt. Es sind keine direkten Schweißungen an den Blechen 5 des Blechpakets notwendig um die Bleche zu arretieren. Beim Einschieben des Federelements 11, d.h. im Rahmen des Ausführungsbeispiels der Wellenfeder, wird das Federelement 11 zusammengedrückt und solchermaßen die in Bezug auf die Achsrichtung Z vorzugsweise in radiale Richtung wirkende Kraft F auf den Keil 12 zur Verkeilung der Bleche erzeugt.

Wenn eine besonders belastbare Ausführung des Jochs benötigt wird, können noch zur Verstärkung des Jochs an die Keile (siehe FIG 1) Rippen 6a, 6b, 6c und 6d angeschweißt werden. In FIG 2 ist der Keil 12 mit der Rippe 6a mittels der Schweißverbindung 17 verschweißt. Die Rippe 6a verleiht der gesamten Anordnung eine zusätzliche Steifigkeit und erhöht die Belastbarkeit. Die Rippen können, z.B. wie in FIG 1 gezeigt, mit der Welle 7, ebenfalls mittels einer Schweißverbindung verbunden werden. Bei dieser Ausführungsform der Erfindung kann nach dem Verschweißen des Keils 12 mit der Rippe 6a das Federelement 11 wieder entfernt werden und z.B. zur Herstellung eines weiteren Jochs verwendet werden. Das Federelement 11 kann aber auch in der Ausnehmung 19 verbleiben. Ansonsten stimmt diese Ausführungsform der Erfindung mit der oben beschriebenen ersten Ausführungsform überein.

Es sei an dieser Stelle angemerkt, dass im Rahmen der Ausführungsbeispiele der Erfindung, die Erfindung anhand eines Jochs eines Rotors, d.h. als Rotorjoch ausgebildet ist. Der Stator 2 der Maschine 1 kann aber ebenfalls ein gemäß der Erfindung aufgebautes Joch aufweisen, d.h. das Joch des Stators 2 kann entsprechend realisiert sein. Die Erfindung kann somit sowohl bei einem Joch eines Rotors als auch bei einem Joch eines Stators einer Maschine angewendet werden.

## Patentansprüche

1. Verfahren zur Herstellung eines Jochs einer elektrischen Maschine (1), wobei das Joch mehrere in einer Achsrichtung (Z) hintereinander angeordnete Bleche (5) aufweist, wobei das Joch in Achsrichtung (Z) durch die Bleche (5) hindurchgehende trapezförmige Ausnehmungen (19) aufweist, wobei die Ausnehmungen (19) jeweilig schräge Kanten (9a,9b) aufweisen, wobei in den Ausnehmungen (19) jeweilig ein trapezförmiger Keil (12) eingeführt wird, wobei der Keil (12) schräge Kanten (10a,10b) aufweist, deren Form an die Form der schrägen Kanten (9a,9b) der jeweiligen Ausnehmung (19) formschlüssig angepasst ist, wobei die Oberseite (14) des Keils (12) von der der Oberseite (14) des Keils (12) zugewandten Seite (8) der jeweiligen Ausnehmung (19) beabstandet angeordnet, wobei zwischen der Oberseite (14) des Keils (12) und der der Oberseite (14) des Keils (12) zugewandten Seite (8) der jeweiligen Ausnehmung (19) ein Federelement (11) eingeschoben wird, das senkrecht zur Achsrichtung (Z) eine Kraft (F) auf den Keil (12) ausübt und die schrägen Kanten (10a,10b) des Keils (12) gegen die schrägen Kanten 9a,9b) der jeweiligen Ausnehmung (19) presst.

2. Verfahren nach Anspruch 1, **dadurch gekennzeichnet, dass** der Keil (12) mit einer Rippe (6a) verschweißt wird.

3. Verfahren nach Anspruch 2, **dadurch gekennzeichnet, dass** nach dem Verschweißen des Keils (12) mit der Rippe (6a), das Federelement (11) entfernt wird.

4. Joch einer elektrischen Maschine (1), wobei das Joch mehrere in einer Achsrichtung (Z) hintereinander angeordnete Bleche (5) aufweist, wobei das Joch in Achsrichtung (Z) durch die Bleche (5) hindurchgehende trapezförmige Ausnehmungen (19) aufweist, wobei die Ausnehmungen (19) jeweilig schräge Kanten (9a,9b) aufweisen, wobei in den Ausnehmungen (19) jeweilig ein trapezförmiger Keil (12) angeordnet ist, wobei der Keil (12) schräge Kanten (10a,10b) aufweist, deren Form an die Form der schrägen Kanten (9a,9b) der jeweiligen Ausnehmung (19) formschlüssig angepasst ist, wobei die Oberseite (14) des Keils (12) von der der Oberseite (14) des Keils (12) zugewandten Seite (8) der jeweiligen Ausnehmung (19) beabstandet angeordnet ist.

5. Joch nach Anspruch 4, **dadurch gekennzeichnet, dass** zwischen der Oberseite (14) des Keils (12) und der der Oberseite (14) des Keils (12) zugewandten Seite (8) der jeweiligen Ausnehmung (19) ein Federelement (11) angeordnet ist, das senkrecht zur Achsrichtung (Z) eine Kraft (F) auf den Keil (12) ausübt und die schrägen Kanten (10a,10b) des Keils (12) gegen die schrägen Kanten (9a,9b) der jeweiligen Ausnehmung (19) presst.

6. Joch nach Anspruch 4 oder 5, **dadurch gekennzeichnet, dass** das Federelement (11) als Wellenfeder ausgebildet ist.

7. Joch nach Anspruch 6, **dadurch gekennzeichnet, dass** das die Wellenfeder (11) an einem der beiden Enden der Wellenfeder (11) mit dem Keil (12) verbunden ist.

8. Joch nach einem der Ansprüche 5 bis 7, **dadurch gekennzeichnet, dass** das der Keil (12) eine in Achsrichtung (Z) verlaufende Nut aufweist in die das Federelement (11) eingelegt ist.

9. Joch nach einem der Ansprüche 4 bis 8, **dadurch gekennzeichnet, dass** der Keil (12) mit einer Rippe (6a) verschweißt ist.

10. Elektrische Maschine, wobei die elektrische Maschine (1) ein Joch nach einem der Ansprüche 4 bis 9 aufweist.

11. Elektrische Maschine, nach Anspruch 10, **dadurch gekennzeichnet, dass** die elektrische Maschine (1) als Generator oder als Elektromotor ausgebildet ist.

12. Elektrische Maschine nach Anspruch 11, **dadurch gekennzeichnet**, das die elektrische Maschine (1) als Windkraftgenerator ausgebildet ist.
